# EUROPÄISCHE PATENTSCHRIFT

(11) **EP 2 496 635 B1**
(45) Veröffentlichungstag und Bekanntmachung des Hinweises auf die Patenterteilung: **31.12.2014**
(21) Anmeldenummer: 10744840.9
(22) Anmeldetag: 24.06.2010
(51) Int. Cl.: C08J 7/02, B29C 71/02, B29C 35/04, B29K 77/00

(54) **VERFAHREN UND VORRICHTUNG ZUM KONDITIONIEREN VON FORMTEILEN AUS KUNSTSTOFF**
METHOD AND DEVICE FOR CONDITIONING MOLDED PARTS MADE OF PLASTIC
PROCÉDÉ ET DISPOSITIF POUR CONDITIONNER DES PIÈCES MOULÉES EN MATIÈRE PLASTIQUE

(30) Priorität: 25.06.2009 DE 102009030378
(43) Veröffentlichungstag der Anmeldung: 12.09.2012
(73) Patentinhaber: Koch, Claus, 67435 Neustadt / Wstr. (DE)
(72) Erfinder: Koch, Claus, 67435 Neustadt / Wstr. (DE)
(74) Vertreter: Fritsch, Klaus
(86) Internationale Anmeldenummer: PCT/DE2010/000737
(87) Internationale Veröffentlichungsnummer: WO 2010/149151

(56) Entgegenhaltungen:
- DE-B- 1 122 554
- "Konditionieren von Fertigteilen aus Ultramid, Technische Information", BASF Plastics , September 2010 (2010-09), Seiten 1-9, XP002612870, Gefunden im Internet: URL:http://www.plasticsportal.net/wa/plast icsEU~de_DE/function/conversions:/publish/ common/upload/engineering_plastics/Conditi oning_Ultramid.pdf [gefunden am 2010-12-06]
- "Konditionierung (Polyamid)", Wikipedia , 6. März 2010 (2010-03-06), XP002612871, Gefunden im Internet: URL:http://de.wikipedia.org/wiki/Kondition ierung_(Polyamid) [gefunden am 2010-12-06]
- "DIN ISO 1110 (1995)", März 1998 (1998-03), DIN Deutsches Institut für Normung e.V., Berlin, XP009142131, Seiten 1-5,
- J. Melcher ET AL: "Dielectric Effects of Moisture in Polyimide", IEEE Transactions on Electrical Insulation Vol. 24 No. 1, February 1989, 1 February 1989 (1989-02-01), pages 31-38, XP055071797, Retrieved from the Internet: URL:http://ieeexplore.ieee.org/ielx1/14/78 6/00019863.pdf?tp=&arnumber=19863&isnumber =786 [retrieved on 2013-07-17]
- VLASVELD D P N ET AL: "Moisture absorption in polyamide-6 silicate nanocomposites and its influence on the mechanical properties", POLYMER, ELSEVIER SCIENCE PUBLISHERS B.V, GB, vol. 46, no. 26, 12 December 2005 (2005-12-12), pages 12567-12576, XP027728396, ISSN: 0032-3861 [retrieved on 2005-12-12]
- Seung Phil Jang ET AL: "Thermal, Mechanical, and Diffusional Properties of Nylon 6/ABS Polymer Blends: Compatibilizer Effect", POLYMER ENGINEERING AND SCIENCE, JULY 2000, Vol, 40, No. 7, 1 July 2000 (2000-07-01), pages 1635-1642, XP055071833, Retrieved from the Internet: URL:http://onlinelibrary.wiley.com/store/1 0.1002/pen.11295/asset/11295_ftp.pdf?v=1&t =hj9jfpva&s=0a1afb52efb449b5a35f164b9ba025 1ddb0093aa [retrieved on 2013-07-18]

## Beschreibung

Die Erfindung betrifft ein Verfahren nach dem Oberbegriff des Anspruches 1 und eine Vorrichtung zur Durchführung des Verfahrens.

Es ist bekannt, daß trockene (d.h. kein Wasser enthaltende) Formteile aus Kunststoffen, die Wasserdampf aufnehmen und dabei ihre Abmessungen verändern können, insbesondere Polyamid, so wie sie im Spritzgußverfahren anfallen, zunächst nicht formbeständig und insbesondere nicht maßhaltig sind, sondern erst nach und nach Wasser aufnehmen. Die Abweichung des Trockenmaßes vom Fertigmaß hängt von der Oberflächengestaltung des Formteils und dem speziellen Polyamidtyp (Nylon-6, Nylon-6,6, Nylon-6/10 usw.) ab. Auch wichtige Eigenschaften, z.B. die Schlagzähigkeit, sind verringert, solange das Werkstück zu wenig Feuchte aufweist. Das gebrauchsfertige Formteil sollte bei bestimmten Polyamid-Typen ca. 3 % Wasser enthalten. Der Formenbauer muß die Gußform so dimensionieren, daß das Formteil erst nach der Aufnahme einer vorgegebenen Menge an Wasser die konstruktiv verlangten Abmessungen aufweist. Dies gilt nicht nur für gewöhnliche, sondern auch für solche Teile, deren Formtreue durch das Einarbeiten eines Faserwerkstoffes wie Glas-, Mineral- oder Kohlenstoff-Fasern verbessert ist, Die künstlich herbeigeführte Aufnahme wird als Konditionieren bezeichnet.

Man versteht darunter den Prozeß, der in der Einwirkung von Wasser oder Wasserdampf auf das Formteil besteht, solange bis das Formteil die konstruktiv vorgesehenen Abmessungen aufweist oder bis sich das Gewicht nach einer bestimmten Mindest-Einwirkungsdauer nicht mehr ändert. Beschrieben und auch angewendet werden Verfahren, bei denen das Konditionieren in der Einwirkung von heißem Wasser, von Wasserdampf (z.B. bis zu 120 Grad Celsius) oder in der Lagerung in einer Klimakammer unter feuchtwarmen Bedingungen besteht. Die Lagerung kann sich je nach der Art des Formteils und des speziellen Polymers über Stunden, Tage oder sogar Wochen hinziehen.

Es versteht sich, daß das herkömmliche Konditionieren ein zeitqufwendiges Verfahren ist und daß die endgültigen Abmessungen des Formteils erst nach und nach erreicht werden. Auch der Aufwand an Wärmeenergie ist beträchtlich.

Aus der DE-AS 1 122 554 ist ein Konditionierungsverfahren bekiannt geworden, bei dem Bogenblätter eines aus dünnem, verhältnismäßig leichtem und relativ undurchlässigem Material bestehenden Stapels in einwandfreier Weise voneinander gelöst bzw. getrennt werden können. In der Hauptsache bezieht sich diese Druckschrift auf Papierstapel, deren Bogenblätter durch Adhäsion aneinander kleben. DieAnwendung von Vakuum dient der Aufhebung der Adhäsion. Einen Einfluß auf die Konditionierung des Papiers oder ähnlichen Materials beschreibt die Druckschrift nicht.

Aus den Druckschriften J. Melcher et al.: "Dielectric Effects of Moisture in Polyamide" IEEE Transactions on Electrical Insulation Vol.24 No. 1, February 1989, 1. Februar 1989, Seite3n 31 - 38, XP05507117997 (gefunden im Internet), VLASFELD D P N et al.: "Moisture absorption in poylamide-67 silicate nanocomposites..." POLYMER, ELSEVIER SCIENCE PUBLISHERS B.V., GB, Bd. 46, Nr. 26, 12. Dezember 2005, Seiten 12567-12576, und Seung Phil Jang et al.: "Thermal, Mechanical and Diffusional Properties of Nylon 6/ABS Polymer Blends: Compalibilizer Effect", POLYMER ENGINEERING AND SCIENCE, JULY 2000, Vol. 40, No. 7.1, 2000-07-01, Seiten 1635-1642, ist je ein Konditionieren von Kunststoffformteilen bekannt geworden, mit dem eine Befeuchtung von Kunststoffteilen durchgeführt wird. Vakuum wird jeweils vor der eigentlichen Konditionierung angewendet.

Aufgabe der Erfindung ist es, ein Verfahren der eingangs genannten Art zu schaffen, bei dem die Konditionierung abgekürzt wird, so daß der gewünschte Zustand des Formteils zuverlässig nach einer relativ kurzern Zeitspanne erreicht wird. Außerdem soll eine Vorrichtung zur Durchführung des Verfahrens angegeben werden.

Diese Aufgabe wird bei einem Verfahren der eingangs genannten Art durch die kennzeichnenden Merkmale des Anspruches 1 gelöst.

Erfindungsgemäß wird die Aufgabe gelöst durch ein Verfahren zum Konditionieren von Formteilen aus Polyamid durch Einwirkung von Wasserdampf in einem vakuumdichten Behälter, welche Formteile vor der Einwirkung des Wasserdampfes einer Behandlung mit vermindertem Druck ausgesetzt werden oder daß die Wasserdampfbehandlung bei vermindertem Druck vorgenommen wird, wobei in einem ersten Schritt der Behälter mit dem zu behandelnden Material beladen wird, gefolgt von mehreren Folgeschritten mit Evakuieren, Einwirkenlassen einer Wasser- oder Wasserdampfphase auf die Formteile während einer angemessen Dauer, Abkühlen, gegebenenfalls Trocknen, wieder Evakuieren und am Ende Entnehmen aus dem Behälter, welches dadurch gekennzeichnet ist, daß in einem zweiten Schritt der Druck in dem Behälter abgesenkt wird, bis im Behälter ein Druck von nicht mehr als 100 mbar erreicht ist und dieser Druck für eine vorbestimmte Zeit gehalten wird, in einem dritten Schritt eine vorbestimmte Wasser- bzw. Dampfmenge in den Behälter eingeleitet wird, um ein Flüssigkeitsbad zu bilden oder eine Sattdampfumgebung zu erzeugen oder das Flüssigkeitsbad und die zu bildende Dampfphase auf eine vorgegebene Temperatur erhitzt und die zu behandelnden Formteile während einer vorbestimmten Zeit in der Sattdampfphase gehalten werden, und die vorstehenden Schritte eins bis drei wiederholt und schließlich Umgebungsluft in den Behälter eingelassen und die Formteile wieder aus dem Behälter entnommen werden.

Eine vorteilhaften Ausgestaltung der Erfindung kann dahin gehen, daß der Behälter beheizt wird.

Das Verfahren wird in einer Vorrichtung durchgeführt, welche dadurch gekennzeichnet ist, daß ein seinerseits beheizbarer Hiffsbehäfter vorgesehen ist.

Erfindungsgemäß also wird ein Verfahren zum Konditionieren von Formteilen aus Polyamid durch Einwirkung von Wasser oder Wasserdampf vorgeschlagen, bei dem die Formteile vor oder noch während der Einwirkung von Wasser(dampf) für eine angemessene Zeit mit vermindertem Luftdruck ausgesetzt werden. Ein Einwirkung von Wasser bzw. Wasserdampf soll sich nahtlos an die Lagerung bei vermindertem Druckanschließen, d.h. die Formteile sollen zwischenzeitlich nicht wieder der Umgebungsluft ausgesetzt werden. Das Verfahren kann in mehreren Zyklen ausgeführt werden, d.h. das Werkstück wird nacheinander in einem geeigneten Behälter (dem Konditionierbehälter) nacheinander vermindertem Druck (sog. "Vakuum") ausgesetzt, danach einer Behandlung mit Wasserdampf unterzogen und ds Ganze mehrfach wiederholt.

Die Druckverminderung sollte auf mindestens 10% des atmosphärischen Druckes getrieben werden, d.h. der Restdruck sollte nicht mehr als 100 hPa betragen. Je nach Leistungsvermögen der Vakuumpumpe kann die Druckverminderung z.B. bis zu 1% des atmosphärischen Druckes erreichen und sollte für mindestens eine Minute angewendet werden. Im allgemeinen genügt eine Einwirkungsdauer von nicht mehr als 5 Minuten je Zyklus. Die Druckverminderung kann bedarfsgesteuert werden in dem Sinne, daß sie abgebrochen wird, sobald ein bestimmtes Maß der Druckverminderung erreicht wird.

Der Ablauf des erfindungsgemäßen Verfahrens umfaßt beispielsweise die folgenden Schritte, wobei in einem ersten Schritt der Behälter mit dem zu behandelnden Material beladen wird, gefolgt von mehreren Folgeschritten mit Evakuieren, Elinwirkenlassen einer Wasser- oder Wasserdampfphase auf die Kunststoffteile Evakuieren und am Ende Entnehmen aus dem Behälter. Die Folgeschritte sind beispielsweise:
in einem zweiten Schritt wird die Vakuumpumpe solange eingeschaltet, bis im Behälter ein absoluter Druck von höchstens 100 HPa erreicht ist,
in einem dritten Schritt wird ein Speiseventil der Wasser- und/oder Dampf - Versorgung geöffnet und eine vorbestimmte Flüssigkeits- bzw. Dampfmenge in den Behälter geleitet, um ein Flüssigkeitsbad zu bilden oder eine Sattdampfumgebung zu erzeugen, ohne dass zuvor wieder Umgebungsluft in den Behälter eingelassen wird,
in einem vierten Schritt wird das Flüssigkeitsbad und die zu bildende Dampfphase durch ein eingebautes Heizelement auf eine vorgegebene Temperatur erhitzt, oder alternativ der gleiche Zweck durch Einleiten von Sattdampf erreicht,
das zu behandelnde Material wird während einer vorbestimmter Zeit in der Sattdampfphase gehalten,
in einem fünften Schritt wird die Vakuumpumpe wieder aktiviert,
in einem sechsten Schritt, nach vorgewählter Evakuierungs-, Abkühlungsund Trocknungszeit, wird die Vakuumpumpe ausgeschaltet und Umgebungsluft in den Behälter eingelassen, und
im letzten Schritt wird das Material wieder aus dem Behälter herausgenommen.

Als Vorrichtungen durch Durchführung des erfindungsgemäßen Verfahrens können alle Geräte geeigneter Abmessungen verwendet werden, die nach Anschluss einer Luftpumpe die Einwirkung von vermindertem Druck auf entsprechend dimensionierte Formteile ermöglichen und zweckmäßig auch so eingerichtet sind, dass sie abwechselnd mit dem Anlegen verminderten Drucks die Einleitung von Wasserdampf gestatten. Die Geräte können zweckmäßig für die Aufnahme von Gitterboxen oder ähnlichen Behältern eingerichtet sein, die ein schnelles Wechseln der Chargen ermöglichen und können für einen weitgehend automatisierten Betrieb eingerichtet sein. Die Vorrichtung kann mit Geräten ausgerüstet sein, mit denen entweder die gesamte Charge oder ein Referenzkörper gewogen werden kann, ohne dass dazu der Behandlungsraum geöffnet werden muss.

Nach einer vereinfachten Ausführungsform der Erfindung kann das Verfahren darin bestehen, dass bereits während der Druckverminderungsphase Wasser oder Wasserdampf in den Behandlungsapparat eingeleitet wird und mittels einer eingebauten Heizung auf eine geeignete Temperatur gebracht wird. Das Verfahren besteht somit, vereinfacht ausgedrückt darin, dass die Formteile einer Behandlung mit Sattdampf unter vermindertem Druck unterzogen werden. Dieses Verfahren ist z. B. für die Behandlung dünnwandiger Formteile geeignet. Unter Sattdampf versteht man Wasserdampf, der sich bei einer vorgegebenen Temperatur im Gleichgewicht mit seiner Flüssigphase befindet, wobei sich ein entsprechender Druck einstellt. Die Temperaturabhängigkeit des Dampfdrucks (die Dampfdruckkurve) kann jedem Tabellenwerk der physikalischen Chemie entnommen werden.

Die gesamte Behandlungszeit einer Charge übersteigt im Allgemeinen nicht 60 bis 90 Minuten, je nach Materialstärke und Beschaffenheit.

Das Verfahren wird im einfachsten Fall in einer Einrichtung mit einem druck- bzw. implosionsfesten Behälter durchgeführt, der einerseits über mindestens ein Ventil mit einer Vakuumpumpe, andererseits über mindestens ein weiteres Ventil mit einer Quelle für Wasser oder Wasserdampf versehen ist. Es sind normalerweise Mittel vorgesehen, die das versehentliche gleichzeitige Einstellen beider Betriebszustände verhindern, jedoch für die Behandlung mit Sattdampf unter vermindertem Druck auch gleichzeitig betätigt werden können. Die Einwirkung von Wasser bzw. Wasserdampf kann unter überatmosphärischem Druck geschehen, z. B. bei bis zu 120 °C. Der nach der Vakuumbehandlung herrschende Unterdruck kann dazu ausgenützt werden, um Wasser oder Wasserdampf in den Behälter einzuziehen. Nach dem Einleiten von Wasserdampf bzw. heißem Wasser befinden sich die Formteile in einer Wasser- oder Sattdampfumgebung. Es kann so vorgegangen werden, dass die für die Behandlung vorgesehene Wasserumgebung durch ein Heizelement auf eine vorbestimmte Behandlungstemperatur gebracht und die Werkstücke darin für eine bestimmte Zeit belassen werden. Die Dauer der einzelnen Phasen der Unterdruck- bzw. Wasser(dampf)behandlung sollte experimentell von Fall zu Fall festgelegt werden, da die zweckmäßigsten Betriebsbedingungen von mehreren Parametern abhängen, die je nach der Art und Abmessung der zu behandelnden Werkstücke unterschiedlich sein können. Geeignete Parameter können auch den nachstehenden Verfahrensansprüchen entnommen werden, die z.T. in der Beschreibung nicht zusätzlich erläutert werden.

Selbstverständlich können Hilfsaggregate vorhanden sein, mit denen ein möglichst ökonomischer Betrieb der Einrichtung möglich ist, z. B. ein Vorratsspeicher für Betriebswasser, vor allem heißes Betriebswasser, damit dieses nicht jedes Mal neu angesetzt werden muss.

## Patentansprüche

1. Verfahren zum Konditionieren von Formteilen aus Polyamid durch Einwirkung von Wasserdampf in einem vakuumdichten Behälter, welche Formteile vor der Einwirkung des Wasserdampfes einer Behandlung mit vermindertem Druck ausgesetzt werden oder daß die Wasserdampfbehandlung bei vermindertem Druck vorgenommen wird, wobei in einem ersten Schritt der Behälter mit dem zu behandelnden Material beladen wird, gefolgt von mehreren Folgeschritten mit Evakuieren, Einwirkenlassen einer Wasser- oder Wasserdampfphase auf die Formteile während einer angemessen Dauer, Abkühlen, gegebenenfalls Trocknen, wieder Evakuieren und am Ende Entnehmen aus dem Behälter, **dadurch gekennzeichnet, daß** in einem zweiten Schritt der Druck in dem Behälter abgesenkt wird, bis im Behälter ein Druck von nicht mehr als 100 mbar erreicht ist und dieser Druck für eine vorbestimmte Zeit gehalten wird, in einem dritten Schritt eine vorbestimmte Wasser- bzw. Dampfmenge in den Behälter eingeleitet wird, um ein Flüssigkeitsbad zu bilden oder eine Sattdampfumgebung zu erzeugen oder das Flüssigkeitsbad und die zu bildende Dampfphase auf eine vorgegebene Temperatur erhitzt und die zu behandelnden Formteile während einer vorbestimmten Zeit in der Sattdampfphase gehalten werden, und die vorstehenden Schritte eins bis drei wiederholt und schließlich Umgebungsluft in den Behälter eingelassen und die Formteile wieder aus dem Behälter entnommen werden.

2. Verfahren nach Anspruch 1, **dadurch gekennzeichnet, daß** der Behälter beheizt wird

3. Vorrichtung zur Durchführung des Verfahrens nach einem der Ansprüche 1 und 2, **dadurch gekennzeichnet, daß** ein seinerseits beheizbarer Hilfsbehälter vorgesehen ist.

## Claims

1. Method for conditioning moulded parts made of polyamide by means of the influence of water vapour in a vacuum-tight vessel, which moulded parts are subjected to a treatment with reduced pressure before being exposed to the influence of the water vapour, or the water vapour treatment is performed at reduced pressure, wherein, in a first step, the vessel is loaded with the material to be treated, followed by a number of subsequent steps involving evacuation, exposing the moulded parts to the influence of a water or water-vapour phase for an appropriate period of time, cooling down, possibly drying, re-evacuation and, at the end, removal from the vessel, **characterized in that**, in a second step, the pressure in the vessel is lowered until a pressure of no more than 100 mbar is reached in the vessel and this pressure is maintained for a predetermined time, in a third step a predetermined amount of water or vapour is introduced into the vessel, in order to form a liquid bath or produce a saturated steam environment, or the liquid bath and the vapour phase to be formed are heated to a prescribed temperature and the moulded parts to be treated are kept in the saturated steam phase during a predetermined time, and the aforementioned steps one to three are repeated and, finally, ambient air is let into the vessel and the moulded parts are removed again from the vessel.

2. Method according to Claim 1, **characterized in that** the vessel is heated.

3. Device for carrying out the method according to either of Claims 1 and 2, **characterized in that** an auxiliary vessel, which for its part can be heated, is provided.

## Revendications

1. Procédé pour conditionner des pièces moulées en polyamide par l'action de vapeur d'eau dans un récipient étanche au vide, lesquelles pièces moulées sont soumises à un traitement sous pression réduite avant l'action de la vapeur d'eau ou le traitement à la vapeur d'eau est effectué sous pression réduite, dans lequel dans une première étape on charge le récipient avec le matériau à traiter, ce qui est suivi par plusieurs étapes successives d'évacuation, d'action d'une phase d'eau ou de vapeur d'eau sur les pièces moulées pendant une durée appropriée, de refroidissement, éventuellement de séchage, de nouveau d'évacuation et à la fin de retrait hors du récipient, **caractérisé en ce que** dans une deuxième étape on abaisse la pression dans le récipient jusqu'à ce que l'on atteigne dans le récipient une pression non supérieure à 100 mbar et on maintient cette pression pendant un temps prédéterminé, dans une troisième étape on introduit une quantité prédéterminée d'eau ou de vapeur dans le récipient afin de former un bain de liquide ou de produire un environnement de vapeur saturée ou on chauffe le bain de liquide et la phase de vapeur à former à une température prédéterminée et on maintient les pièces moulées à traiter pendant un temps prédéterminé dans la phase de vapeur saturée, et on répète les étapes précédentes un à trois et finalement on introduit de l'air ambiant dans le récipient et on retire de nouveau les pièces moulées hors du récipient.

2. Procédé selon la revendication 1, **caractérisé en ce que** l'on chauffe le récipient.

3. Dispositif pour la mise en oeuvre du procédé selon l'une des revendications 1 et 2, **caractérisé en ce qu'**il est prévu un récipient auxiliaire pouvant être chauffé de son côté.
